# EUROPEAN PATENT APPLICATION

(11) **EP 3 629 054 A1**
(43) Date of publication of application: **01.04.2020**
(21) Application number: 19193143.5
(22) Date of filing: 22.08.2019
(51) Int. Cl.: G01S 7/481, G01S 17/931

(54) **SEALING MEMBER AND VEHICLE SENSOR UNIT**

(30) Priority: 25.09.2018 JP 2018178545
(71) Applicant: Toyoda Gosei Co., Ltd., Kiyosu-shi, Aichi 452-8564 (JP)
(72) Inventor: OTOYO, Masashi, Kiyosu-shi, Aichi 452-8564 (JP); TAKAHASHI, Kazuhisa, Kiyosu-shi, Aichi 452-8564 (JP); ICHIKAWA, Tadaoki, Kiyosu-shi, Aichi 452-8564 (JP)
(74) Representative: Kramer Barske Schmidtchen Patentanwälte PartG mbB

(57) **Abstract**

A sealing member arranged in a vehicle sensor unit is provided. The vehicle sensor unit includes an optical sensor and a cover. The optical sensor is configured to transmit light out of a vehicle and receive the light that has struck and has been reflected by an object outside the vehicle. The cover is arranged in front of the optical sensor in a direction in which the light is transmitted to cover the optical sensor and permit passage of the light. The sealing member connects the optical sensor and the cover to each other while covering a gap between the optical sensor and the cover.

## Description

### 1. Field

The following description relates to a sealing member that prevents foreign matter such as water and dust from collecting on the lens surface of an optical sensor such as an infrared sensor, which is arranged at the outer end of a vehicle and detects the environment of the vehicle. The following description also relates to a vehicle sensor unit including the sealing member.

### 2. Description of Related Art

To detect the environment of a vehicle, structures having an optical sensor such as an infrared sensor arranged at an outer end such as the front end of a vehicle have been developed. The optical sensor looks less appealing when seen from the outside. Thus, the optical sensor is arranged so as to be hidden at the back side of a cover including an identification mark such as an emblem. A conventional cover opposed to an optical sensor to hide the optical sensor includes, for example, a radar cover described in Japanese Laid-Open Patent Publication No. 2017-175515.

Such a radar cover is spaced away from an infrared camera (optical sensor). This forms a gap between the radar cover and the infrared camera. Thus, foreign matter such as water or dust will pass through the gap and collect on the lens surface of the infrared camera, thereby lowering the performance of the infrared camera.

### SUMMARY

It is an objective of the present invention to provide a sealing member and a vehicle sensor unit that prevent foreign matter from collecting on the lens surface of an optical sensor.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A sealing member arranged in a vehicle sensor unit that solves the above-described problem is provided. The vehicle sensor unit includes an optical sensor and a cover. The optical sensor is configured to transmit light out of a vehicle and receive the light that has struck and has been reflected by an object outside the vehicle. The cover is arranged in front of the optical sensor in a direction in which the light is transmitted to cover the optical sensor and permit passage of the light. The sealing member connects the optical sensor and the cover to each other while covering a gap between the optical sensor and the cover.

A vehicle sensor unit that solves the above-described problem includes an optical sensor configured to transmit light out of a vehicle and receive the light that has struck and has been reflected by an object outside the vehicle, a cover arranged in front of the optical sensor in a direction in which the light is transmitted to cover the optical sensor and permit passage of the light, and the above-described sealing member.

Other features and aspects will be apparent from the following detailed description, the drawings, and the claims.

### BRIEF DESCRIPTION OF THE DRAWINGS

Fig. 1 is a front view showing a vehicle in which a vehicle sensor unit including a sealing member according to an embodiment is arranged on a radiator grille.
Fig. 2 is an enlarged cross-sectional view showing the main part of Fig. 1.
Fig. 3 is a perspective view showing the sealing member.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

A vehicle sensor unit 20 including a sealing member 30 according to an embodiment will now be described with reference to the drawings.

In the following description, the direction in which a vehicle 11 travels forward will be referred to as the front, and the reverse direction will be referred to as the rear. The vertical direction refers to the vertical direction of the vehicle, and the left-right direction refers to the width direction of the vehicle (vehicle width direction) that matches with the left-right direction when the vehicle is travelling forward.

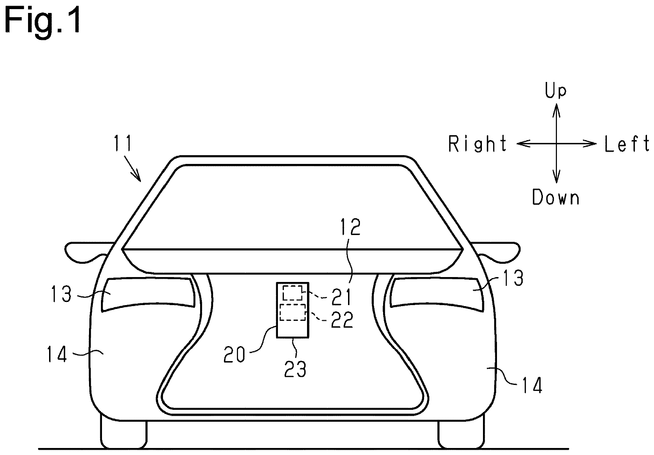

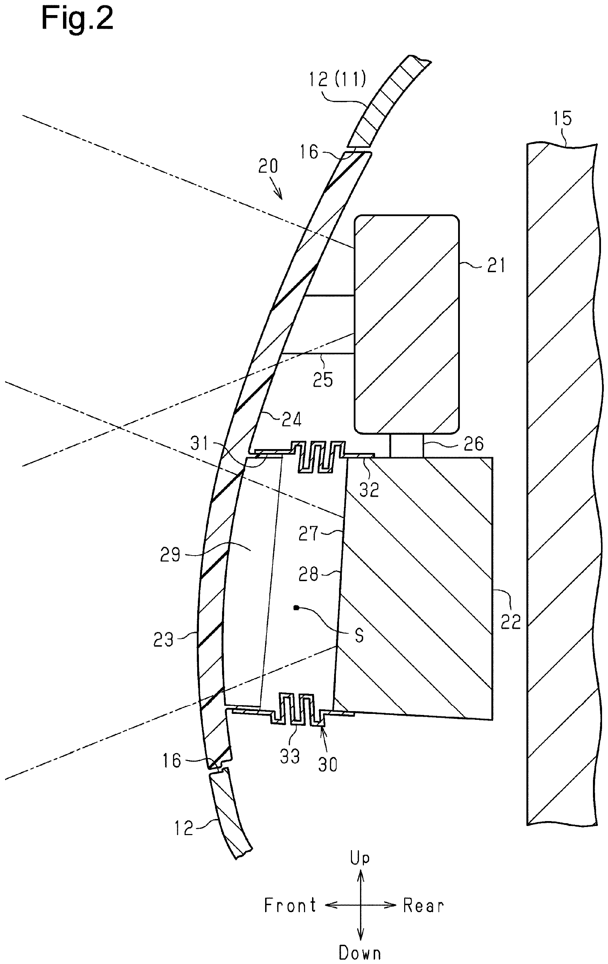

As shown in Fig. 1, the vehicle 11 includes a radiator grille 12, a pair of headlights 13, and a pair of bumper-integrated fenders 14 as vehicle exterior parts, which are attached to the front end of the vehicle body. The headlights 13 and the bumper-integrated fenders 14 are arranged on the left and right sides of the radiator grille 12. The radiator grille 12 has a function of guiding outside air such as relative wind to a radiator 15 (refer to Fig. 2) to cool the radiator 15.

As shown in Figs. 1 and 2, a window 16 opens in an upper portion of the radiator grille 12. The vehicle sensor unit 20, which has a function of detecting the environment of the vehicle 11, is installed between the window 16 and the radiator 15. The vehicle sensor unit 20 includes a millimeter wave radar device 21, an infrared radar device 22, which is one example of an optical sensor, and a plate-shaped cover 23, which covers the millimeter wave radar device 21 and the infrared radar device 22 from the front.

The millimeter wave radar device 21 and the infrared radar device 22 are arranged next to each other in the vertical direction. The front sides of the millimeter wave radar device 21 and the infrared radar device 22 are covered by a single cover 23. The millimeter wave radar device 21 is arranged above the infrared radar device 22 and attached to a rear surface 24 of the cover 23 by an attachment member 25 on the left and right sides. The lower end of the millimeter wave radar device 21 is connected to the upper end of the infrared radar device 22 by a connection member 26. Thus, the infrared radar device 22 is supported by and suspended from the millimeter wave radar device 21 via the connection member 26.

The millimeter wave radar device 21 has a sensor function of transmitting millimeter waves out of the vehicle 21 toward a predetermined angular range in front of the vehicle 11 and receiving millimeter waves that have struck and have been reflected by an object outside the vehicle 11. Millimeter waves refer to radio waves with wavelengths of 1 mm to 10 mm and frequencies of 30 GHz to 300 GHz.

The millimeter wave radar device 21 detects the distance to and the relative speed with respect to the leading vehicle traveling in front of the vehicle 11 based on the time difference between the transmitted millimeter wave (transmitted wave) and the received millimeter wave (received wave), the strength of the received wave, and the like. The millimeter wave radar device 21 is characterized by being resistant to bad weather such as rain, fog, and snow, and having a longer measurable distance than other methods.

The infrared radar device 22 has a sensor function of transmitting infrared ray (light) toward a wider angular range than that of the millimeter wave radar device 21 and receiving infrared ray that has struck and has been reflected by an object outside the vehicle 10 including a leading vehicle, a pedestrian, and the like. Infrared ray is a kind of light and has a longer wavelength than the wavelength of visible light (0.36 µm to 0.83 µm). The infrared radar device 22 mainly detects objects closer to the vehicle 11 than objects to be detected by the millimeter wave radar device 21.

The infrared radar device 22 measures the distance between the host vehicle (vehicle 11) and the leading vehicle and the relative speed with respect to the leading vehicle based on the transmitted infrared ray (transmitted wave) and the received infrared ray (received wave). In Fig. 2, the infrared rays transmitted from the infrared radar device 22 are shown by alternate long and short dashed lines, and the millimeter waves transmitted from the millimeter wave radar device 21 are shown by the long dashed double-short dashed lines.

The cover 23 has a substantially rectangular shape that is longer in the vertical direction than in the left-right direction. The cover 23 is slightly curved to bulge frontward. The cover 23 is arranged on the window 16 of the radiator grille 12. The cover 23 is attached to a part of the radiator grille 12 or the vehicle body, specifically to a part around the window 16 through engagement of clips (not shown), screws (not shown), tabs (not shown), or the like.

The cover 23 is located in front of the millimeter wave radar device 21 and the infrared radar device 22 in the direction in which infrared rays are transmitted from the infrared radar device 22 to cover the millimeter wave radar device 21 and the infrared radar device 22. The front surface of the cover 23, that is, the outer surface of the cover 23, is exposed to the vehicle exterior through the window 16. The cover 23 is made of a synthetic plastic material that permits passage of millimeter waves and infrared rays. In this case, it is preferred that the cover 23 have an attenuation rate of 2.5 dB or lower when millimeter waves pass through the cover 23 and that the cover 23 have a transmittance of 70% or higher when infrared rays pass through the cover 23.

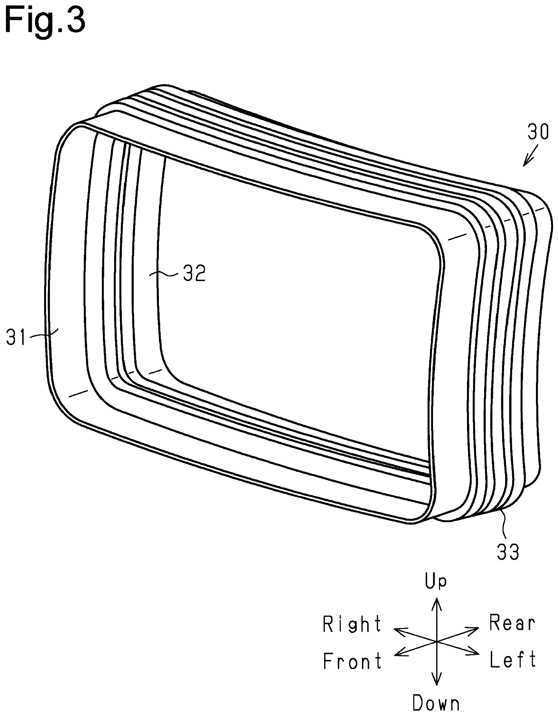

As shown in Figs. 2 and 3, the infrared radar device 22 has the form of a substantially rectangular parallelepiped. The infrared radar device 22 includes a lens surface 28, which is located on the middle part of a front surface 27 of the infrared radar device 22. A protrusion 29, which has the form of a rectangular frame, protrudes rearward from a position of the rear surface 24 of the cover 23 opposed to the front surface 27 of the infrared radar device 22 in the front-rear direction. The protrusion 29 is opposed to a peripheral part of the front surface 27 of the infrared radar device 22 in the front-rear direction. A gap S is formed between the inner region of the protrusion 29 on the rear surface of the cover 23 and the front surface 27 of the infrared radar device 22.

The protrusion 29 of the cover 23 and the front end of the infrared radar device 22 are connected to each other by a sealing member 30, which has the form of a rectangular tube. That is, the sealing member 30 covers the gap S between the infrared radar device 22 and the cover 23 to connect the protrusion 29 of the cover 23 to the front end of the infrared radar device 22. In other words, the sealing member 30 isolates a closed space formed by the gap S, which is between the infrared radar device 22 and the cover 23, from the ambient environment.

One end (front end in Fig. 2) of the sealing member 30 is externally fitted to the protrusion 29 of the cover 23. The other end (rear end in Fig. 2) of the sealing member 30 is externally fitted to the front end of the infrared radar device 22. The sealing member 30 has a contact surface 31, which is in contact with the protrusion 29 of the cover 23. The contact surface 31 is closely bonded to the protrusion 29 by adhesive. The sealing member 30 has a contact surface 32, which is in contact with the front end of the infrared radar device 22. The contact surface 32 is closely bonded to the front end of the infrared radar device 22 by adhesive.

The entire sealing member 30 is made of low-volatility elastomer, which is flexible material. In this case, it is preferred that the elastomer configuring the sealing member 30 be less likely to undergo outgassing. The sealing member 30 includes a shape changing portion 33, which has a bellows shape, at the middle part of the sealing member 30 in the axial direction (front-rear direction in Fig. 2). The shape changing portion 33 deforms flexibly in conformance with a change in the orientation of the infrared radar device 22 (adjustment of the direction in which infrared rays are transmitted).

The entire sealing member 30 of the present embodiment is made of elastomer. Thus, the entire sealing member 30 also refers to the shape changing portion 33. Further, the infrared radar device 22 has an extremely thin atmospheric exposure passage (not shown) through which the gap S, which is a space closed by the sealing member 30, is exposed to the atmosphere. This limits an increase in the pressure of the closed gap S (inner pressure of sealing member 30) and thus limits expansion of the sealing member 30.

The vehicle 11 has an electronic control unit (not shown). The millimeter wave radar device 21 and the infrared radar device 22 are electrically connected to the electronic control unit. The electronic control unit executes various types of processes to support the driving of the vehicle 11 according to the environment of the vehicle 11, which is obtained from output signals of the millimeter wave radar device 21 and the infrared radar device 22. The processes include a process of warning that the vehicle 11 may deviate from the lane, a process of warning that the vehicle 11 may collide, and a process of automatically adjusting the distance between vehicles.

The operation of the vehicle sensor unit 20 will now be described.

The millimeter wave radar device 21 of the vehicle sensor unit 20 transmits millimeter waves out of the vehicle. The millimeter waves pass through the cover 23, which is located in front of the millimeter wave radar device 21 in the transmission direction of millimeter waves. The millimeter waves that have struck and have been reflected by an object such as another vehicle or an obstacle ahead in the millimeter wave transmission direction and have passed through the cover 23 are received by the millimeter wave radar device 21.

Also, the infrared radar device 22 of the vehicle sensor unit 20 transmits infrared rays out of the vehicle. The infrared rays pass through the cover 23, which is located in front of the infrared radar device 22 in the transmission direction of infrared rays. The infrared rays that have struck and have been reflected by an object such as another vehicle or an obstacle ahead in the infrared ray transmission direction and have passed through the cover 23 are received by the infrared radar device 22.

In this case, when the lens surface 28 is stained, the performance of the infrared radar device 22 markedly decreases. In the vehicle sensor unit 20 of the present embodiment, the sealing member 30 isolates the closed space formed by the gap S, which is between the infrared radar device 22 and the cover 23, from the ambient environment. Thus, the sealing member 30 prevents entry of foreign matter such as water and dust into the gap S (inner space of sealing member 30), which is a closed space, from the outside. This prevents the lens surface 28 of of the infrared radar device 22 from being stained by foreign matter such as water and dust from the outside, thereby maintaining the performance of the infrared radar device 22 for a long period of time.

Further, when the vehicle sensor unit 20 is coupled to the vehicle 11 or when the vehicle sensor unit 20 is checked, the direction of the infrared radar device 22 may deviate from a predetermined direction. If the deviation is modified by changing the orientation of the infrared radar device 22, the shape changing portion 33 of the sealing member 30 deforms flexibly in conformance with a change in the orientation of the infrared radar device 22. Thus, the sealing member 30 does not obstruct a change in the orientation of the infrared radar device 22. That is, the infrared radar device 22 can change its orientation in a state of being connected to the protrusion 29 of the cover 23 by the sealing member 30.

The embodiment described above in detail has the following advantages.
(1) The sealing member 30 connects the protrusion 29 of the cover 23 to the front end of the infrared radar device 22 while covering the gap S between the infrared radar device 22 and the cover 23. In such a structure, the gap S is isolated from the ambient environment by the sealing member 30. This prevents foreign matter such as water and dust from the outside from collecting on the lens surface 28 of the infrared radar device 22.
(2) The sealing member 30 includes the shape changing portion 33, which changes in shape in conformance with a change in the orientation of the infrared radar device 22. This structure changes the orientation of the infrared radar device 22 even if the infrared radar device 22 and the cover 23 are connected to each other by the sealing member 30.
(3) The shape changing portion 33 of the sealing member 30 is made of a flexible material. Such a structure elastically deforms the shape changing portion 33. This improves the conformity of the sealing member 30 for a change in the orientation of the infrared radar device 22.
(4) The shape changing portion 33 of the sealing member 30 has a bellows shape. Such a structure flexibly deforms the shape changing portion 33. This further improves the conformity of the sealing member 30 for a change in the orientation of the infrared radar device 22.
(5) In the vehicle sensor unit 20, the infrared radar device 22 is supported by and suspended from the millimeter wave radar device 21, which is attached to the cover 23, via the connection member 26. Further, the front end of the infrared radar device 22 is connected to the protrusion 29 of the cover 23 by the sealing member 30, which is made of elastomer. Thus, the sealing member 30 absorbs impact on the cover 23 resulting from, for example, collision of the vehicle 11. This prevents the infrared radar device 22 from receiving impact.

### Modifications

The above-described embodiment may be modified as follows.

In the sealing member 30, the shape changing portion 33 does not necessarily have to have a bellows shape. That is, the shape changing portion 33 may have a flat-plate shape.

In the sealing member 30, the shape changing portion 33 does not necessarily have to be made of a flexible material. That is, the shape changing portion 33 may be made of a multi-joint member that deforms flexibly.

The sealing member 30 does not have to include the shape changing portion 33. That is, the entire sealing member 30 may be made of a hard material that does not elastically deform (for example, hard plastic or metal).

Portions of the sealing member 30 other than the shape changing portion 33, which has a bellows shape, may be made of a hard material that does not elastically deform (for example, hard plastic or metal).

The entire sealing member 30 may have a bellows shape.

The vehicle sensor unit 20 does not have to include the millimeter wave radar device 21.

The contact surface 31 of the sealing member 30 may be closely bonded to the protrusion 29 using a double-sided adhesive tape.

The contact surface 32 of the sealing member 30 may be closely bonded to the front end of the infrared radar device 22 using a double-sided adhesive tape.

In the vehicle sensor unit 20, an infrared camera may be used as an optical sensor instead of the infrared radar device 22.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A sealing member arranged in a vehicle sensor unit (20), wherein the vehicle sensor unit (20) includes an optical sensor (22) and a cover (23), the optical sensor (22) being configured to transmit light out of a vehicle and receive the light that has struck and has been reflected by an object outside the vehicle, and the cover (23) being arranged in front of the optical sensor (22) in a direction in which the light is transmitted to cover the optical sensor (22) and permit passage of the light,
the sealing member being **characterized by** connecting the optical sensor (22) and the cover (23) to each other while covering a gap between the optical sensor (22) and the cover (23).

2. The sealing member according to claim 1, **characterized by** a shape changing portion (33) that changes in shape in conformance with a change in an orientation of the optical sensor (22).

3. The sealing member according to claim 2, **characterized in that** the shape changing portion (33) is made of a flexible material.

4. The sealing member according to claim 2 or 3, **characterized in that** the shape changing portion (33) has a bellows shape.

5. A vehicle sensor unit **characterized by**:
an optical sensor (22) configured to transmit light out of a vehicle and receive the light that has struck and has been reflected by an object outside the vehicle;
a cover (23) arranged in front of the optical sensor (22) in a direction in which the light is transmitted to cover the optical sensor (22) and permit passage of the light; and
the sealing member (30) according to any one of claims 1 to 4.
